# EUROPÄISCHE PATENTSCHRIFT

(11) **EP 2 244 867 B1**
(45) Veröffentlichungstag und Bekanntmachung des Hinweises auf die Patenterteilung: **20.07.2011**
(21) Anmeldenummer: 09714862.1
(22) Anmeldetag: 26.02.2009
(51) Int. Cl.: B25J 19/00

(54) **ENERGIEZUFÜHRUNGSVORRICHTUNG FÜR INDUSTRIEROBOTER, UND INDUSTRIEROBOTER MIT EINER SOLCHEN ENERGIEZUFÜHRUNGSVORRICHTUNG**
ENERGY SUPPLY DEVICE FOR INDUSTRIAL ROBOTS, AND INDUSTRIAL ROBOT HAVING SUCH AN ENERGY SUPPLY DEVICE
DISPOSITIF D'ALIMENTATION EN ÉNERGIE DE ROBOTS INDUSTRIELS ET ROBOT INDUSTRIEL COMPORTANT UN TEL DISPOSITIF D'ALIMENTATION EN ÉNERGIE

(30) Priorität: 27.02.2008 DE 102008011383
(43) Veröffentlichungstag der Anmeldung: 03.11.2010
(73) Patentinhaber: KUKA Roboter GmbH, 86165 Augsburg (DE)
(72) Erfinder: FICHTL, Bernhard, 86459 Gessertshausen (DE)
(74) Vertreter: Patentanwälte Funk & Böss GbR
(86) Internationale Anmeldenummer: PCT/EP2009/001385
(87) Internationale Veröffentlichungsnummer: WO 2009/106332

(56) Entgegenhaltungen:
- EP-A- 1 304 195
- DE-A1-102004 028 577

## Beschreibung

Die Erfindung betrifft eine Energiezuführungsvorrichtung für Industrieroboter, mit einer Energiezuführungsleitung und einem Gehäuse, in dem ein Abschnitt der Energiezuführungsleitung zum Längenausgleich geführt ist.

Aus der EP 1 369 211 B1 ist eine Vorrichtung zum Führen und Zurückholen mindestens eines Schlauches eines Industrieroboters bekannt, mit einer Rinne mit seitlicher Längsöffnung und mit einer den Schlauch umgebenden Spannfeder, wobei die Breite der seitlichen Öffnung der Rinne geringer als die Abmessung der den Schlauch umgebenden Spannfeder ist. Die darin beschriebene Rinne dient dazu eine Vorrichtung zum Führen und zum Längenausgleich eines Schlauches eines Industrieroboters in kompakter und einfacher Ausgestaltung zu schaffen, die ein weitgehendes genaues Führen und Zurückholen des Schlauches in kleinem Raum ermöglicht.

Aus der EP 1 588 807 B1 ist eine Vorrichtung zum Führen von Energieversorgungskabeln entlang Achsen eines Mehrachs-Industrieroboters bekannt, wobei ein Formteil zum Schaffen einer von einer Oberfläche des Maschinenteils beabstandeten Befestigungsfläche für Maschinenanbauten an einem Maschinenteil angeordnet ist, wobei das Formteil wenigstens einen ersten, an der Oberfläche des Maschinenteils anliegenden Schenkel und einen zweiten, die Befestigungsfläche bildenden Schenkel aufweist und wobei wenigstens ein Energieversorgungskabel in einem zwischen den beiden Schenkeln des Formteils definierten Zwischenraum zwischen der Oberfläche und der Befestigungsfläche gehalten und geführt ist. Die Befestigungsfläche dient dazu, Maschinenanbauten, wie bspw. Drahtvorschubeinrichtungen von Lichtbogenschweißgeräten oder deren Steuerungskomponenten auf der Energiezuführungsvorrichtung zu befestigen.

Aus der DE 10 2004 028 577 A1 ist eine Führungsvorrichtung zum Führen eines zumindest eine Versorgungsleitung aufweisenden Schlauches bekannt, mit einem Führungselement, in welchem der Schlauch in seiner Längsrichtung beweglich führbar ist, mit einem Rückholmittel, welches in einem Widerlager gelagert ist und kraftschlüssig mit dem Schlauch verbindbar ist, wobei das Führungselement einen geschlossenen Rundrohrabschnitt sowie einen sich an den Rundrohrabschnitt anschließenden Ausgleichsabschnitt zum seitlichen Zuführen der Versorgungsleitung aufweist. Durch eine getrennte Ausbildung zweier Halbschalen kann der hohle Gehäuseabschnitt zu Installations- oder Wartungsarbeiten durch Abnahme des unteren Halbschalenelements geöffnet werden, ohne dass die Rohrschellen geöffnet werden müssen. Das Führungselement braucht daher zu Wartungsarbeiten nicht vom Roboter gelöst werden. Eine solche Führungsvorrichtung ist als Produkt auch mit einer mittels zwei Scharnieren aufklappbaren oberen Gehäusehälfte bekannt. Diese hat jedoch den Nachteil, dass durch das Aufklappen des Deckels genug Platz nach oben gegeben sein muss und bei einem vorhandenen Überbau von Maschinenanbauten dieser vor dem Öffnen des Gehäuses entfernt werden muss.

Aufgabe der Erfindung ist es, eine Energiezuführungsvorrichtung für Industrieroboter zu schaffen, bei der ein im Gehäuse geführter Abschnitt einer Energiezuführungsleitung leicht zugänglich gemacht werden kann. Insbesondere soll eine leichte Zugänglichkeit möglich sein, ohne die Energiezuführungsvorrichtung selbst oder nahe daran angeordnete Maschinenanbauten aus ihren Positionen bewegen bzw. entfernen zu müssen.

Erfindungsgemäß wird vorgeschlagen, dass die Energiezuführungsvorrichtung für Industrieroboter die folgenden Merkmale aufweist:
- eine Energiezuführungsleitung
- ein Gehäuse, in dem ein Abschnitt der Energiezuführungsleitung zum Längenausgleich geführt ist,
- ein Deckel, der zwischen einer ersten Position, in welcher der Deckel eine Zugangsöffnung zu dem im Gehäuse geführten Abschnitt der Energiezuführungsleitung freigibt und einer zweiten Position, in welcher der Deckel die Zugangsöffnung überdeckt, durch Lagermittel bezüglich des Gehäuses verstellbar gelagert ist,
- wobei die Lagermittel zum Verstellen des Deckels unter Beibehaltung der Orientierung der Deckelebene in der ersten und zweiten Position ausgebildet sind.

### Die Vorteile der erfindungsgemäßen

Energiezuführungsvorrichtung, insbesondere mit Schiebedeckel ist, dass auch bei einem Überbau z.B. mit einer Ventilinsel oder einer Schweißdrahtvorschubeinrichtung ein Abschrauben dieser Komponenten nicht notwendig ist, wodurch sich eine Zeitersparnis ergibt. Außerdem braucht nach oben kein weiterer zusätzlicher Platz mehr vorhanden sein, da der Deckel seitlich bzw. insbesondere nach hinten weggeschoben werden kann. Die üblicher Weise notwendigen Scharniere können entfallen, wodurch sich die Teilevielfalt verringert.

Indem der Deckel in seiner Freigabeposition zumindest im Wesentlichen die gleiche Ausrichtung im Raum einnimmt, wie in seiner Schließposition, wird der benötigte Aktionsraum, der bspw. zur Schaffung eines Zugangs für Wartungsarbeiten und Bauteileaustausch notwenig ist, klein bzw. kompakt gehalten. D.h. es ist bspw. kein deutlicher freier Raum oberhalb der Energiezuführungsvorrichtung notwendig, um einen Verschlußdeckel, wie im Stand der Technik durch Schwenken nach oben aufklappen zu können. Ohne einen ausreichenden Freiraum, der mindestens die Deckelbreite aufweisen muss, kann ein schwenkbarer Deckel nicht vollständig geöffnet werden.

Verbessert ist die Situation, wenn wie erfindungsgemäß nach der allgemeinsten Ausgestaltung vorgesehen, der Deckel bspw. mittels einer Parallelogramm-Lenkeranordnung von der Schließposition in die Freigabeposition geschwenkt wird oder analog eines Rolladens aus einer ersten Ebene in eine parallel versetzte Ebene verbracht wird. Dabei ist nur eine geringere freie Höhe erforderlich, als dies zum scharnierartigen Aufschwenken des Deckels notwendig wäre. Die Parallelogramm-Lenkeranordnung bzw. das Rolladenprinzip kann dabei eine freie Höhe beanspruchen, die bspw. dem Durchmesser der Energiezuführungsleitung entspricht, da diese sowieso über einen Mindestspalt in dessen Breite einsetzbar und entfernbar sein sollte, insbesondere wenn Maschinenanbauten oberhalb der Energiezuführungsvorrichtung vorgesehen sind.

Die Erfindung ist besonders dann vorteilhaft, wenn der Raum oberhalb der Energiezuführungsvorrichtung durch Maschinenanbauten besetzt ist. Mit der erfindungsgemäßen Lösung können die Maschinenanbauten in ihren jeweiligen Positionen verbleiben, bzw. sie müssen nicht demontiert werden, um einen ausreichenden Freiraum zu schaffen, der ein Öffnen des Deckels zulässt.

Das Gehäuse kann wannenartig gestaltet sein, mit einer frei zugänglichen oberen Öffnung, die mittels des Deckels zu verschließen ist. Das Gehäuse kann einstückig oder mehrteilig ausgebildet sein. Der Deckel kann in der einfachsten Ausgestaltung von einer flachen Blechplatte gebildet werden. Der Deckel kann jedoch auch, in Anlehnung einer Gestaltung als Gehäusehälfte eine gewisse wannenartige Form aufweisen. Dabei ist jedoch sicherzustellen, dass die wesentliche Deckfläche flächenmäßig in seiner Größe gegenüber evtl. vorhandenen Seitenflächen überwiegt. Die erfindungsgemäße Definition der Deckelebene bezieht sich in diesen Fällen auf die überwiegende Erstreckungsebene in der die flächenmäßig größte Deckfläche liegt oder zu der sie sich in einem gewissen, vorzugsweise geringfügigem Abstand parallel dazu erstreckt.

Teil der Erfindung ist es, dass es zunächst nur darauf ankommt, dass der Deckel in der ersten Position, in welcher der Deckel eine Zugangsöffnung zu dem im Gehäuse geführten Abschnitt der Energiezuführungsleitung freigibt und in der zweiten Position, in welcher der Deckel die Zugangsöffnung überdeckt, die gleiche Orientierung einnehmen. D.h. auf dem Weg der dazwischen liegenden Bewegung des Deckels kann die Orientierung abweichen. Je nach Größe dieser Abweichung ergibt sich eine wesentlich bessere oder eine geringer verbesserte Zugänglichkeit bei entsprechen kleinem Bauraum. So kann eine Abweichung der Orientierung während einer Öffnungs- oder Schließbewegung in einem Maße erfolgen, wie bspw. die Energiezuführungsvorrichtung von einem darüber angeordneten Maschinenanbau beabstandet ist, um eine Energiezuführungsleitung über diesen gebildeten spaltartigen Zwischenraum einfügen oder entfernen zu können. So wird ein solcher Spalt mindestens eine Breite aufweisen, die dem Durchmesser der Energiezuführungsleitung entspricht.

Als Energiezuführungsleitung wird neben einer elektrischen Einzelleitung oder eines mehradrigen elektrischen Kabels auch ein Kabelbündel verstanden, das neben elektrischen Leitern oder anstatt derer auch Leitungen zum Zuführen anderer Medien, wie bspw. Schlauchleitungen zum Zuführen von Druckluft, Gas oder Wasser umfassen. All diese Leitungskombinationen können in einem gemeinsamen Schutzschlauch gebündelt sein.

Die erste Position stellt eine Freigabeposition dar. In der Freigabeposition befindet sich der Deckel vorzugsweise in seiner maximalen Offenstellung. Eine Freigabeposition des Deckels kann jedoch schon vor Erreichen der maximalen Offenstellung erreicht sein, wenn eine ausreichende Zugänglichkeit zu dem im Gehäuse geführten Abschnitt der Energiezuführungsleitung besteht. Die zweite Position stellt eine Schließposition dar. Als Schließposition wird insbesondere diejenige Position des Deckels bezeichnet, in welcher der im Gehäuse geführte Abschnitt der Energiezuführungsleitung vollständig überdeckt ist, bzw. wenn der Deckel das Gehäuse verschließt. In der verschlossenen Position kann der Deckel bspw. zur Vermeidung des Eindringens von Staub oder Fluiden dichtend an dem Gehäuse anliegen.

Die Lagermittel können zum Verstellen des Deckels entlang eines Bewegungsweges zwischen erster und zweiter Position, der in der Deckelebene liegt, ausgebildet sein.

In dieser ersten Konkretisierungsstufe liegen nicht nur die Schließposition und die Freigabeposition in zumindest annähernd der selben Ebene, sondern der Deckel befindet sich während seiner gesamten Bewegung zwischen Schließposition und Freigabeposition in zumindest annähernd der selben Ebene. Der Deckel führt also im Wesentlichen eine ebene Bewegung aus, d.h. die maßgebliche Flächennormale der Deckelhauptfläche behält ihre Orientierung bei, wobei eine Drehung um eine Achse parallel oder deckungsgleich zur Flächennormalen zulässig ist. So könnte der Deckel bspw. in seiner Deckelebene eine Schwenkbewegung um einen Eckpunkt ausführen.

Die Lagermittel können zum translatorischen Verstellen des Deckels zwischen erster und zweiter Position ausgebildet sein.

In dieser zweiten Konkretisierungsstufe führt der Deckel innerhalb der definierten Ebene eine translatorische Bewegung aus, d.h. es handelt sich um einen Schiebedeckel. Der Schiebedeckel kann schubladenartig an dem Gehäuse geführt sein und durch Vor- und Zurückschieben geöffnet bzw. geschlossen werden. Dazu kann an dem Deckel ein Handgriff vorgesehen sein.

Da der Deckel statt eben zu sein auch schalenförmig gestaltet sein kann, könnte auch einer von zwei identischen oder spiegelsymmetrischen Gehäuseschalen den Deckel bilden. So könnte eine Schiebeverbindung zwischen Gehäuse und Deckel erzielt werden, indem zwei Gehäuseschalen gegeneinander verschieblich gelagert sind. So könnte nicht nur die obere Gehäuseschale einen oberen Deckel bilden, sondern auch die untere Gehäuseschale einen unteren Schiebedeckel bilden. Insbesondere können die Lagermittel zum translatorischen Verstellen des Deckels in die erste Position in eine Richtung ausgebildet sein, die ausgehend von einer Stirnseite, welche einen Austritt für die Energiezuführungsleitung aufweist, sich in Richtung einer der Stirnseite gegenüberliegenden Rückseite des Gehäuses erstreckt. Wenn man die Stirnseite des Gehäuses, die einen Austritt für die Energiezuführungsleitung aufweist als Vorderseite definiert, dann würde sich das Gehäuse durch nach hinten Schieben des Deckels aus der Schließposition in die Freigabeposition öffnen lassen. Ein Wiederverschließen des Gehäuses erfolgt durch nach vorne Ziehen des Deckels aus der Freigabeposition in die Schließposition. Diese Variante ist besonders zuverlässig und benötigt den geringsten freien Bauraum, um eine Zugänglichkeit zu dem im Gehäuse geführten Abschnitt der Energiezuführungsleitung zu schaffen.

Die Lagermittel können den Deckel kulissenartig an dem Gehäuse führen. Dabei kann der Deckel mit zwei Führungsnuten oder Langlöchern rechts- und linksseitig versehen sein. Dazu kann das Lagermittel gehäuseseitige, in Längsschlitze des Deckels eingreifende Lagerzapfen aufweisen. In einer -speziellen Ausgestaltung können die Längsschlitze in zwei seitlich am Deckel gegenüberliegenden Laschen vorgesehen und die Lagerzapfen an gegenüberliegenden Seitenwandabschnitten des Gehäuses von einander weg weisend angeordnet sein. Auf jeder Seite des Gehäuses können bspw. ein oder zwei vorspringende Dorne vorgesehen sein, welche die Lagerzapfen bilden. In der einfachsten Ausgestaltung können die vorspringenden Dorne von Schraubenschäften gebildet werden. Am Gehäuse, d.h. im Grundkörper der Box können sich aber auch zwei Zylinderschrauben mit Innensechskant befinden, deren zylindrische Köpfe sich in den Führungsnuten im Deckel befinden. Der Deckel weist Schlitze auf, die eine Breite aufweisen, welche der Breite der Lagerzapfen bzw. dem Durchmesser der Dorne entspricht d.h. nur geringfügig größer ist. In Abhängigkeit der gewünschten Bewegung des Deckels zwischen Schließ- und Freigabeposition könne die Schlitze unterschiedlich verlaufen und insbesondere gerade verlaufen. Vorzugsweise sind zwei gegenüberliegende gerade verlaufende Schlitze am Deckel vorgesehen, so dass der Deckel in einer translatorischen Bewegung aus der Schließposition in die Freigabeposition geschoben werden kann. Die Schlitze oder auch andere Führungsnuten können in einer Abwandlung der Erfindung am Gehäuse vorgesehen werden. Dann sind die Lagerzapfen bzw. Dorne am Deckel vorzusehen.

Die am Deckel vorgesehenen Laschen können von vertikal zur Deckelebene umgebogenen Deckelabschnitten gebildet werden, d.h. die Laschen, welche die Schlitze aufweisen, können einstückig mit dem Deckel ausgebildet sein. Ist der Deckel aus einem Blech gefertigt, so können die Laschen durch einfaches Umbiegen aus der Ebene des Deckels umgeformt werden. Im Falle von glasfaserverstärkten Kunststoffdeckeln können die Laschen bereits in der umgebogenen Orientierung zusammen mit der Deckeloberfläche gelegt und in dieser Endorientierung ausgehärtet werden. Wird der Deckel im Kunststoffspritzgussverfahren hergestellt, so können die Laschen in ihren jeweiligen Endorientierungen unmittelbar an den Deckel angeformt werden.

Die Laschen können die gegenüberliegenden Seitenwandabschnitte des Gehäuses von außen umgreifen. Dabei sind die Lagerzapfen bzw. Dorne seitlich am Gehäuse von einander weg weisend angeordnet und greifen von einer Innenseite der Laschen durch die Schlitze hindurch, um den Deckel zu halten.

In jeder erfindungsgemäßen Ausgestaltung der Energiezuführungsvorrichtung kann der Deckel in der zweiten Position, also in seiner Schließposition durch Spannmittel gehalten sein. Gleichzeitig verhindern die Spannmittel auch die Entstehung von Geräuschen durch Klappern des Deckels. Die Spannmittel verhindert ein unbeabsichtigtes oder unerwünschtes selbsttätiges Öffnen des Gehäuses. Die Spannmittel können dazu beitragen, den Deckel staubdicht oder fluiddicht an dem Gehäuse zu halten. Vorzugsweise ist stirnseitig am Gehäuse und an der Rückseite bspw. jeweils ein gesicherter Schellverschluß vorgesehen.

Die Erfindung beansprucht auch Industrieroboter, die mit einer vorbeschriebenen Energiezuführungsvorrichtung ausgestattet sind.

Die Erfindung ist anhand eines Ausführungsbeispiels näher erläutert. Alle Merkmale dieses konkreten Ausführungsbeispiels können weitere vorteilhafte Ausgestaltungen der Erfindung offenbaren.

Es zeigen:
- Fig. 1: eine perspektivische Ansicht eines Industrieroboters mit einer erfindungsgemäßen Energiezuführungsvorrichtung;
- Fig. 2: eine perspektivische Ansicht der Energiezuführungsvorrichtung nach Fig. 1 in der Schließposition;
- Fig. 3: eine perspektivische Ansicht der die Energiezuführungsvorrichtung nach Fig. 1 in einer Freigabeposition.

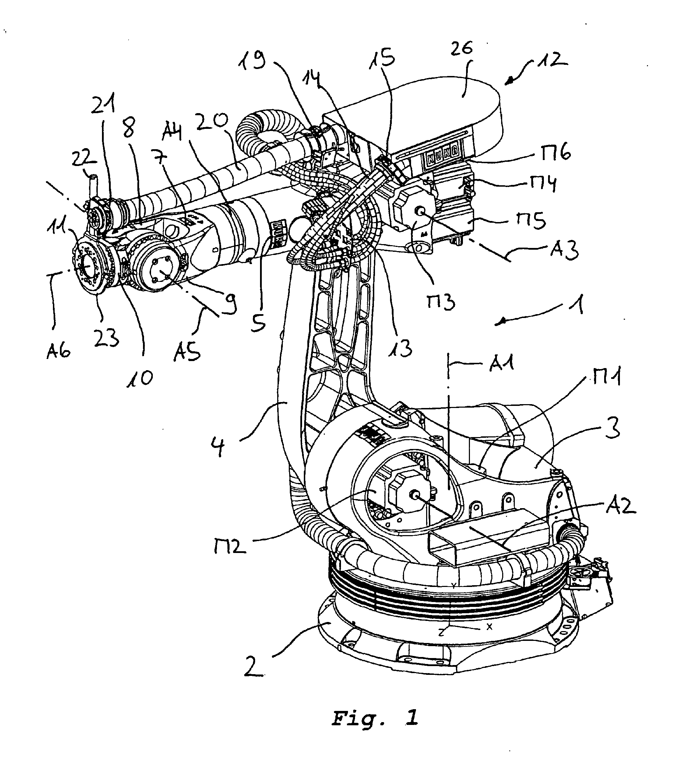

Die Fig. 1 zeigt einen Industrieroboter 1 mit einem Grundgestellt 2 an dem ein Karussell 3 um eine erste vertikale Achse A1 drehbar gelagert und mittels eines ersten Antriebsmotors M1 drehangetrieben ist. An dem Karussell 3 ist eine Schwinge 4 um eine zweite horizontale Achse A2 auf und ab schwenkbar gelagert und mittels eines zweiten Antriebsmotors M2 drehangetrieben. Die Schwinge 4 trägt einen Arm 5, der um eine dritte horizontale Achse A3 auf und ab schwenkbar gelagert und mittels eines dritten Antriebsmotors M3 drehangetrieben ist. An dem Arm 5 ist eine vierte Achse A4 vorgesehen, welche in Längserstreckung des Armes 5 verläuft und über einen vierten Antriebsmotors M4 eine Hand 7 des Arms 5 drehantreibt. Von der Hand 7 erstrecken sich ein erster Schenkel 8 und ein zweiter Schenkel 9 gabelförmig nach vorne. Die beiden Schenkel 8 und 9 tragen eine Lagerung für ein freies Ende 10 der Hand 7. Die Lagerung definiert eine fünfte Achse A5 des Industrieroboters 1, um welche die Hand 7 mittels eines fünften Antriebsmotors M5 schwenkbar bewegt werden kann. Ergänzend weist die Hand 7 eine sechste Achse A6 auf, um einen Befestigungsflansch 11 mittels eines sechsten Antriebsmotors M6 drehbar antreiben zu können.

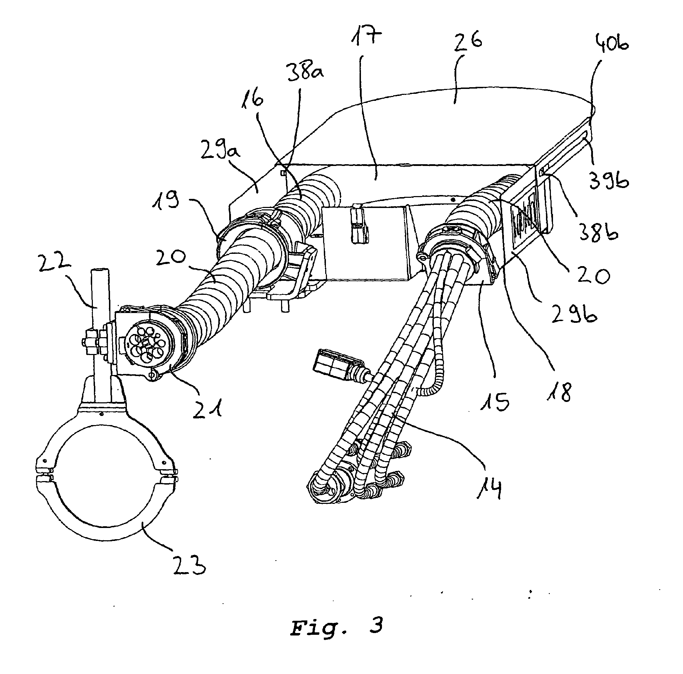

Der Arm 5 trägt eine Energiezuführungsvorrichtung 12. Die Energiezuführungsvorrichtung 12 beginnt hinter einer Anschlußplatte 13, die fest mit dem Arm 5 des Industrieroboters 1 verbunden ist. Von der Anschlußplatte 13 führen Einzelleitungen 14 an eine Schelle 15. Die Schelle 15 ist an einem Halteabschnitt 18 der Energiezuführungsvorrichtung 12 befestigt. Die Schelle 15 klemmt die Einzelleitungen 14 fest und fixiert diese in einer festen Position bezüglich der Energiezuführungsvorrichtung 12. Ein Abschnitt 16 (Fig. 3) einer Energiezuführungsleitung 17 ist U-förmig in einem Gehäuse 24 der Energiezuführungsvorrichtung 12 federvorgespannt geführt. Im U-förmigen Abschnitt 16 und austrittsseitig nach einer Gleitführungsschelle 19 sind die Einzelleitungen 14 in eine gemeinsame Energiezuführungsleitung 17, insbesondere durch einen Schutzschlauch 20 zusammengefasst. Der Schutzschlauch 20 endet an einer Spannschelle 21, die in einem Abstand vom Arm 5 mittels eines Schlauchhalters 22 gehalten ist. Der Schlauchhalter 22 ist durch eine zweiteilige Klemmschelle 23 an dem Befestigungsflansch 11 des Industrieroboter 1 befestigt.

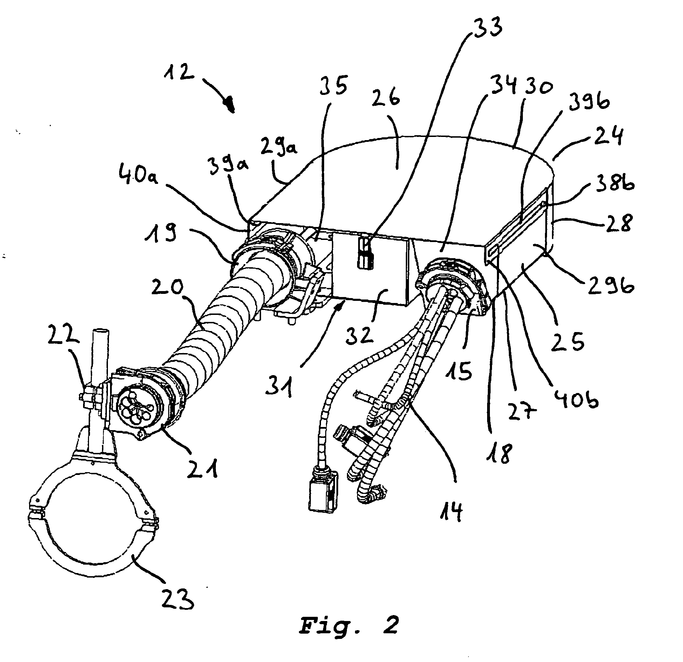

In Fig. 2 ist die Energiezuführungsvorrichtung 12 dargestellt. Die Energiezuführungsvorrichtung 12 weist ein kastenförmiges Gehäuse 24 auf. Das Gehäuse 24 umfasst ein wannenartiges Unterteil 25 und einen Deckel 26. Das Unterteil 25 besteht aus einem Boden 27 und einer umlaufenden Seitenwand 28. Die Seitenwand 28 ist entlang zweier gegenüberliegender Seitenwandabschnitte 29a, 29b und einer Rückseite 30 geschlossen und verläuft vorzugsweise U-förmig um den Rand des Bodens 27. Die Seitenwand 28 kann einteilig oder mehrteilig ausgebildet sein. Der Rückseite 30 gegenüberliegend und in Fig. 2 aus der Zeichnungsebene vortretend ist eine Stirnseite 31 angeordnet. Die Stirnseite 31 weist in einem mittleren Abschnitt eine Stirnwand 32 auf, welche ein Spannmittel 33 zum Fixieren des Deckels 26 trägt. In Fig. 2 rechter Hand der mittigen Stirnwand 32 ist eine Eintrittsöffnung 34 für die Einzelleitungen 14 vorhanden. Die Schelle 15 klemmt die Einzelleitungen 14 fest und fixiert diese in einer festen Position bezüglich der Energiezuführungsvorrichtung 12. Ein Abschnitt 16 (Fig. 3) der Energiezuführungsleitung 17 ist U-förmig im Gehäuse 24 der Energiezuführungsvorrichtung 12 federvorgespannt geführt. In Fig. 2 linker Hand der mittigen Stirnwand 32 ist ein Austritt 35 für den Schutzschlauch 20 vorhanden. Der Schutzschlauch 20 endet an der Spannschelle 21, die in einem Abstand vom Arm 5 mittels des Schlauchhalters 22 gehalten ist. Der Schlauchhalter 22 weist die zweiteilige Klemmschelle 23 zur Befestigung an dem Befestigungsflansch 11 des Industrieroboter 1 auf.

Eine Zugangsöffnung 36 zu dem Abschnitt 16 (Fig. 3) der Energiezuführungsleitung 17 ist in Fig. 2 durch den Deckel 26 verschlossen dargestellt. Der Deckel 26 ist durch Lagermittel an dem Unterteil 25 des Gehäuses 24 verstellbar gelagert. In der gezeigten Ausgestaltung zur translatorischen Verstellung des Deckels 26 zwischen seiner zweiten Position, in der die Zugangsöffnung 36 von dem Deckel 26 verschlossen ist und seiner ersten Position, in der die Zugangsöffnung 36 freigegeben ist, befindet sich der Deckel 26 gemäß Fig. 2 in der Schließposition d.h. in seiner zweiten Position. In Fig. 3 ist der Deckel 26 in seiner Freigabeposition d.h. in der ersten Position gezeigt.

Die Lagermittel weisen zwei gegenüberliegende, von einander weg weisende Lagerzapfen 38a, 38b auf. Der Lagerzapfen 38a ist an dem Seitenwandabschnitt 29a befestigt und ragt im wesentlichen nach außen, kann sich aber geringfügig auch nach innen erstrecken. Der Lagerzapfen 38b ist an dem Seitenwandabschnitt 29b befestigt und ragt im wesentlichen nach außen, kann sich aber geringfügig auch nach innen erstrecken. Die Lagerzapfen 38a und 38b können beispielsweise von Zylinderkopfschrauben gebildet werden. Die Zylinderkopfschrauben können zu ihrer drehenden Betätigung einen Innensechskant aufweisen. Die Lagerzapfen 38a und 38b ragen jeweils in einen Längsschlitz 39a , 39b des Deckels 26 hinein. Die Längsschlitze 39a, 39b sind an gegenüberliegenden Laschen 40a, 40b des Deckels 26 vorgesehen. Die Laschen 40a, 40b sind durch Umbiegen von Deckelabschnitten des Deckels 26 hergestellt. Die Laschen 40a, 40b umgreifen die Seitenwandabschnitte 29a, 29b vorzugsweise von außen. Statt jeweils eines Lagerzapfens 38a, 38b an jeweils einem der Seitenwandabschnitte 29a, 29b können auch zwei oder mehrere Lagerzapfen 38a, 38b an jedem der Seitenwandabschnitte 29a, 29b vorgesehen sein.

## Patentansprüche

1. Energiezuführungsvorrichtung für Industrieroboter (1), aufweisend:
- eine energiezuführungsleitung (17)
- ein Gehäuse (24), in dem ein Abschnitt der Energiezuführungsleitung (17) zum Längenausgleich geführt ist,
- ein Deckel (26), der zwischen einer ersten Position, in welcher der Deckel (26) eine Zugangsöffnung (36) zu dem im Gehäuse (24) geführten Abschnitt der Energiezuführungsleitung (17) freigibt und einer zweiten Position, in welcher der Deckel (26) die Zugangsöffnung (36) überdeckt, durch Lagermittel bezüglich des Gehäuses (24) verstellbar gelagert ist,
- wobei die Lagermittel zum Verstellen des Deckels (26) unter Beibehaltung der Orientierung der Deckelebene in der ersten und zweiten Position ausgebildet sind.

2. Energiezuführungsvorrichtung nach Anspruch 1, bei der die Lagermittel zum Verstellen des Deckels (26) entlang eines Bewegungsweges zwischen erster und zweiter Position, der in der Deckelebene liegt, ausgebildet sind.

3. Energiezuführungsvorrichtung nach Anspruch 2, bei der die Lagermittel zum translatorischen Verstellen des Deckels (26) zwischen erster und zweiter Position ausgebildet sind.

4. Energiezuführungsvorrichtung nach Anspruch 3, bei der die Lagermittel zum translatorischen Verstellen des Deckels (26) in die erste Position in eine Richtung ausgebildet sind, die ausgehend von einer Stirnseite (31), welche einen Austritt (35) für die Energiezuführungsleitung (17) aufweist, sich in Richtung einer der Stirnseite (31) gegenüberliegenden Rückseite (30) des Gehäuses (24) erstreckt.

5. Energiezuführungsvorrichtung nach Anspruch 4, bei der die Lagermittel gehäuseseitige, in Längsschlitze (39a, 39b) des Deckels (26) eingreifende Lagerzapfen (38a, 38b) aufweist.

6. Energiezuführungsvorrichtung nach Anspruch 5, bei der die Längsschlitze (39a, 39b) in zwei seitlich am Deckel (26) gegenüberliegenden Laschen (40a, 40b) vorgesehen sind und die Lagerzapfen (38a, 38b) an gegenüberliegenden Seitenwandabschnitten (29a, 29b) des Gehäuses (24) von einander weg weisend angeordnet sind.

7. Energiezuführungsvorrichtung nach Anspruch 6, bei der die am Deckel (26) vorgesehenen Laschen (40a, 40b) von vertikal zur Deckelebene umgebogenen Deckelabschnitten gebildet werden.

8. Energiezuführungsvorrichtung nach Anspruch 7, bei der die Laschen (40a, 40b) die gegenüberliegenden Seitenwandabschnitte (29a, 29b) des Gehäuses (24) von außen umgreifend angeordnet sind.

9. Energiezuführungsvorrichtung nach einem der Ansprüche 1 bis 8, bei welcher der Deckel (26) in der zweiten Position durch Spannmittel (33) gehalten ist.

10. Industrieroboter mit einer Energiezuführungsvorrichtung (12) nach einem der Ansprüche 1 bis 8.

## Claims

1. Energy supply device for industrial robots (1), comprising:
- an energy supply line (17),
- a housing (24), in which a section of the energy supply line (17) is guided for length adjustment,
- a cover (26), which is mounted by bearing means to be adjustable with respect to the housing (24) between a first position, in which the cover (26) releases an access opening (36) to the section of the energy supply line (17) guided in the housing (24) and a second position in which the cover (26) covers the access opening (36),
- wherein the bearing means are designed for adjusting the cover (26) at the same time maintaining the orientation of the cover plane in the first and second position.

2. Energy supply device according to claim 1, in which the bearing means are designed for adjusting the cover (26) along a movement path between a first and second position which lies in the plane of the cover.

3. Energy supply device according to claim 2, in which the bearing means are designed for the translational adjustment of the cover (26) between a first and second position.

4. Energy supply device according to claim 3, in which the bearing means are designed for the translational adjustment of the cover (26) into the first position in one direction, which extends from an end face (31), which has an outlet (35) for the energy supply line (17), in the direction of a rear side (30) of the housing (24) opposite the end face (31).

5. Energy supply device according to claim 4, in which the bearing means comprises housing-side bearing pins (38a, 38b) engaging in longitudinal slots (39a, 39b) of the cover (26).

6. Energy supply device according to claim 5, in which the longitudinal slots (39a, 39b) are provided in two laterally opposite tabs (40a, 40b) on the cover (26) and the bearing pins (38a, 38b) are arranged pointing away from one another on opposite side wall sections (29a, 29b) of the housing (24).

7. Energy supply device according to claim 6, in which the tabs (40a, 40b) provided on the cover (26) are formed by cover sections which are bent vertically in relation to the cover plane.

8. Energy supply device according to claim 7, in which the tabs (40a, 40b) are arranged to grip around the outside of the opposite side wall sections (29a, 29b) of the housing (24).

9. Energy supply device according to one of claims 1 to 8, in which the cover (26) is held in the second position by clamping means (33).

10. Industrial robot with an energy supply device (12) according to one of claims 1 to 8.

## Revendications

1. Dispositif d'alimentation en énergie pour robots industriels (1), comportant
- une ligne d'alimentation en énergie (17)
- un boîtier (24) dans lequel un tronçon de la ligne d'alimentation en énergie (17) est guidé pour compenser la longueur,
- un couvercle (26) qui est monté, par des moyens de support, de manière mobile par rapport au boîtier (24) entre une première position dans laquelle le couvercle (26) libère une ouverture d'accès (36) vers le tronçon de la ligne d'alimentation en énergie (17), qui est guidé dans le boîtier (24), et une deuxième position dans laquelle le couvercle (26) recouvre l'ouverture d'accès (36),
- les moyens de support étant réalisés pour déplacer le couvercle (26) en maintenant l'orientation du plan de couvercle dans la première et la deuxième position.

2. Dispositif d'alimentation en énergie selon la revendication 1, dans lequel les moyens de support sont réalisés pour déplacer le couvercle (26) le long d'une course de déplacement entre la première et la deuxième position, laquelle est située dans le plan de couvercle.

3. Dispositif d'alimentation en énergie selon la revendication 2, dans lequel les moyens de support sont réalisés pour déplacer le couvercle (26) en translation entre la première et la deuxième position.

4. Dispositif d'alimentation en énergie selon la revendication 3, dans lequel les moyens de support pour déplacer le couvercle (26) en translation dans la première position sont réalisés dans une direction qui, à partir d'une face frontale (31) qui présente une sortie (35) pour la ligne d'alimentation en énergie (17), s'étend en direction d'une face arrière (30) du boîtier (24), laquelle est opposée à la face frontale (31).

5. Dispositif d'alimentation en énergie selon la revendication 4, dans lequel les moyens de support présentent des tourillons (39a, 39b) côté boîtier qui s'engagent dans des fentes longitudinales (38a, 38b) du couvercle (26).

6. Dispositif d'alimentation en énergie selon la revendication 5, dans lequel les fentes longitudinales (38a, 38b) sont prévues dans deux pattes (40a, 40b) opposées latéralement sur le couvercle (26) et les tourillons (38a, 38b) sont agencés sur des tronçons de paroi latérale (29a, 29b) du boîtier (24), en étant détournés l'un de l'autre.

7. Dispositif d'alimentation en énergie selon la revendication 6, dans lequel les pattes (40a, 40b) prévues sur le boîtier (26) sont formées par des tronçons de couvercle repliées verticalement au plan du couvercle.

8. Dispositif d'alimentation en énergie selon la revendication 7, dans lequel les pattes (40a, 40b) sont agencées de manière à entourer depuis l'extérieur les tronçons de paroi extérieure (29a, 29b) opposés du boîtier (24).

9. Dispositif d'alimentation en énergie selon l'une des revendications 1 à 8, dans lequel le couvercle (26) est maintenu dans la deuxième position par des moyens de serrage (33).

10. Robot industriel comportant un dispositif d'alimentation en énergie (12) selon l'une des revendications 1 à 8.
